# EUROPEAN PATENT APPLICATION

(11) **EP 4 641 153 A1**
(43) Date of publication of application: **29.10.2025**
(21) Application number: 24382463.8
(22) Date of filing: 26.04.2024
(51) Int. Cl.: G01K 1/08, G01K 11/3206, G01K 13/00

(54) **CRYOGENIC TEMPERATURE SENSOR BASED ON COATED FIBER OPTICS**

(71) Applicant: Instituto Nacional De Tecnica Aeroespacial "Esteban Terradas", 28850 Torrejón de Ardoz (ES)
(72) Inventor: FRÓVEL, Malte, 28850 Torrejón de Ardoz (ES)
(74) Representative: TRBL Intellectual Property

(57) **Abstract**

The present invention discloses a temperature sensor 1 comprising a Fiber Bragg Grating 2, a first coating 3 comprising a polymeric or metallic material such as polyimide, a second coating 4, arranged externally to the first coating 3, comprising a polymeric material such as an epoxy adhesive and a cylindrical sheath 5 comprising a UV light-transparent heat-shrinkable tube 6 of high thermal coefficient at 20 K, as it is the case of polytetrafluoroethylene, arranged externally to the second coating 4, and wherein the cylindrical sheath 5 has suffered a thermal process so that it exerts a pressure or throttling in the radial direction on the outer surface of the second coating 4. This temperature sensor 1 is adapted to provide temperature measurements at cryogenic temperatures without loss of accuracy. Systems 7 including one or more temperature sensors 1 and manufacturing processes of the temperature sensors 1 are also disclosed.

## Description

### FIELD OF THE INVENTION

The present invention belongs to the field of sensors based on optical fiber, and more specifically, to cryogenic temperature sensors based on Fiber Bragg Gratings.

### BACKGROUND OF THE INVENTION

Fiber Bragg Grating (FBG) sensors consist of a length of optical fiber in the core of which a series of fringes (Bragg grating), that cause the refractive index of the core not to be constant, but to vary periodically in the longitudinal direction of the fiber, are engraved. The etched Bragg grating acts as a filter that reflects a certain wavelength of the light illuminating the optical fiber while letting the rest of the optical spectrum pass through.

FBGs can be effectively used to measure strain and temperature by analyzing the shift of the peak of the optical spectrum reflected in the FBG. However, and despite the various advantages these sensors may pose, their use as temperature sensors at very low (e.g., cryogenic) temperatures is limited. Due to the properties of the fibers, specifically to their thermal expansion coefficient, they suffer from a large loss of accuracy when the temperature is below a certain threshold. In fact, FBG sensors normally do not have sufficient resolution at temperatures around 20 K, the temperature of liquid hydrogen, near which their resolution diminishes to the order of several degrees Kelvin.

With the aim of alleviating this limitation, different coatings (comprising polymers, metals, or other materials) have been applied to FBGs in order to increase their resolution at low temperatures. For instance, epoxy adhesives have been used, ameliorating the accuracy loss at low temperatures, but not at such low temperatures as 20 K. Other materials, such as Polytetrafluoroethylene (PTFE), have also been tested in combination with the epoxy adhesives, due to their high thermal expansion coefficient. Nevertheless, these approaches have been typically rejected in the art since the epoxy adhesive does not adhere correctly to the PTFE layer.

The present invention is aimed at solving the aforementioned problems by providing a new temperature sensor based on a FBG.

### SUMMARY OF THE INVENTION

To overcome the above limitations, the invention proposes a temperature sensor based on a Fiber Bragg Grating which does not lose accuracy at cryogenic temperatures (around and below 20 K). This is due to the fact that said temperature sensor comprises a multi-layer coating formed by an a polymeric material adapted to be cured with UV light, that prevents in a first instance from accuracy loss at low temperatures, and by a sheath comprising a UV-light transparent heat-shrinkable tube, which also prevents from accuracy loss, and which acts as a mechanical protection of the FBG.

More specifically, and advantageously, a first object of the invention relates to a temperature sensor adapted for its use at temperatures of 20 K and below comprising a Fiber Bragg Grating wherein at least a section of said Fiber Bragg Grating comprises:
- a first coating comprising a polymeric or metallic material;
- a second coating comprising a polymeric material adapted to be cured with UV light, the second coating comprising an inner surface arranged in contact with the first coating and an outer surface; and
- a cylindrical sheath comprising a UV light-transparent heat-shrinkable tube.

Advantageously, the cylindrical sheath comprises an inner surface arranged in contact with the outer surface of the second coating; the UV light-transparent heat-shrinkable tube comprises a material with a thermal expansion coefficient higher than 5 · 10⁻⁶ K⁻¹ at 20 K; and the cylindrical sheath has suffered a thermal process so that it exerts a pressure or throttling in the radial direction on the outer surface of the second coating.

Within the scope of the present invention, a UV light-transparent material shall be interpreted as a material which allows 90% or more of light in a wavelength range comprised between 10 nm and 400 nm to pass through.

In a preferred embodiment of the invention, the material comprised by the first coating comprises polyimide, the material comprised by the second coating comprises an epoxy adhesive, and/or the UV light-transparent heat-shrinkable tube comprises polytetrafluoroethylene (PTFE).

Fiber Bragg Grating temperature sensors lose accuracy when temperature drops below a certain threshold near or below 20 K, which makes them unsuitable for temperature measurements in cryogenic materials such as liquid hydrogen. The present invention solves this problem by providing a multi-layer coated temperature sensor based on a Fiber Bragg Grating. The first layer, closer to the fiber, comprises a polymeric or metallic material, preferably polyimide, that protects the structural integrity of the fiber. The second and the third layers, comprising a polymeric material, preferably epoxy adhesive, and a UV light transparent heat-shrinkable tube, comprising, preferably, PTFE, respectively, are the ones responsible for maintaining the temperature sensor's high accuracy at cryogenic temperatures. These materials have a very high thermal expansion coefficient at these very low temperatures, which allows for reaching temperature sensor sensitivities of 15 to 18 pm/K when used at temperatures around 20 K. Besides, the heat-shrinkable tube makes the sensor robust and easy to handle, and it prevents the epoxy resin from suffering from cuts and cracks. Furthermore, it can be used as a mold (explained in more detail below) for the epoxy adhesive, since it is transparent to UV light. Therefore, it can be used in the curing process of said adhesive.

Despite these advantages, PTFE has traditionally been disregarded in the art for this kind of applications since it has been found very difficult to get the epoxy adhesive to adhere to it. The present invention, however, overcomes this problem by providing not a regular PTFE substrate but a PTFE heat-shrinkable tube. In this way, the union between the PTFE and the epoxy adhesive is not chemical (these two structures are not adhered to one another) but rather physical, since the PTFE heat-shrinkable tube is heated so that it exerts a homogeneous pressure or throttling in the radial direction on the second coating (which is the epoxy adhesive), maintaining both structures together. Even more, it reinforces the adhesion between the epoxy adhesive and the fiber. Thus, PTFE advantageous properties can be exploited without the drawbacks discussed in the art, leading to a temperature sensor with high accuracies even at cryogenic temperatures of 20 K and below. This allows for its use for measuring the temperature of liquid hydrogen inside cryogenic tanks. Due to the properties of the sensor described, a single or multiple fibers with one or different sections being coated with the referred multi-layers may be introduced in a fuel tank in order to measure the temperature of different points allowing deduction of the amount of fuel in storage. Moreover, due the robustness provided by the PTFE tube, the fiber may be bent forming a helicoid, i.e., covering a large volume of the tank, without risk of damage.

Furthermore, the described multi-layered coating can be performed in the whole section of the Fiber Bragg Grating or in one or more subsection of the same. Thus, a single fiber can bear a plurality of high-accuracy temperature sensors allowing for multiplexed measurements within the same fiber. Similarly, the sections of the fiber which are not coated by this multi-layer structure can be advantageously used as deformation sensors in order to simultaneously measure temperature and deformation with the same Fiber Bragg Grating.

Thus, in a preferred embodiment of the invention, the measuring system further comprises one or more deformation sensors configured to provide deformation data in the structure of the Fiber Bragg Grating and arranged such that said one or more deformation sensors do not overlap with the one or more temperature sensors. This allows for simultaneous measurements of both temperature and deformation within the same Fiber Bragg Grating, which is advantageous in many applications such as in avionics.

In a preferred embodiment of the invention, the first coating, the second coating, and/or the cylindrical sheath are arranged coaxially to the fiber Bragg grating. This ensures the homogeneity across the layers of the temperature sensor which increases the accuracy since no anomalous thermal deformations may intervene in the measuring process.

In another preferred embodiment of the invention, the inner diameter of the cylindrical sheath is comprised between 0.5 mm and 2 mm, and, more preferably, between 0.85 mm and 1.2 mm. Even more preferably, the inner diameter of the cylindrical sheath is 0.97 mm. On the other hand, the thickness of the cylindrical sheath's wall is comprised between 0.1 mm and 0.4 mm, and, more preferably, it is 0.23 mm.

A second object of the invention relates to a system for measuring temperature comprising one or more temperature sensors according to any of the described embodiments and wherein each temperature sensor is configured to provide temperature data in the structure of the Fiber Bragg Grating.

Additionally, the system may comprise:
- processing means connected to each temperature sensor and adapted to obtain and process the temperature data provided by each temperature sensor providing processed data; and/or
- storage means connected to each temperature sensor and/or to the processing means and adapted to store the temperature data provided by each temperature sensor and/or the processed data.

The system may further comprise a display connected to each temperature sensor and/or to the processing means and/or to the storage means adapted to display to a user temperature data acquired by each temperature sensor, temperature data processed by the processing means and/or temperature data stored in the storage means.

Finally, a third object of the invention refers to a method for manufacturing a temperature sensor according to any of the described embodiments, the method being characterized in that it comprises performing the following steps in any possible technical order:
a) providing a Fiber Bragg Grating (2) comprising a first coating (3);
b) introducing a section of the Fiber Bragg Grating (2) into a UV light-transparent heat-shrinkable tube (6) comprising a material with a thermal expansion coefficient higher than 5 · 10⁻⁶ K⁻¹ at 20 K;
c) tensing the section of the Fiber Bragg Grating (2) introduced in the heat-shrinkable tube (6);
d) filling the space comprised between an outer surface of the first coating (3) and an inner surface of the PTFE heat-shrinkable tube (6) with a polymeric material adapted to be cured with UV light;
e) curing the polymeric material by applying UV light externally and across the heat-shrinkable tube (6); and
f) heating the heat-shrinkable tube (6) so that it exerts a pressure or throttling in the radial direction on an outer surface of the cured polymeric material.

In the case in which a Fiber Bragg Grating comprising a first coating is not available, step a) may be carried out by performing the following sub steps:
a1) providing an optical fiber;
a2) writing by UV light a plurality of fringes corresponding to a Bragg grating into a section of the core of said optical fiber by applying UV laser light in combination with a phase mask and/or standard interference techniques, obtaining a Fiber Bragg Grating; and
a3) coating a section of the Fiber Bragg Grating obtained in step a2) with a layer of polymeric or metallic material, preferably comprising polyimide, using standard techniques, obtaining a Fiber Bragg Grating comprising a first coating.

This way, after providing a Fiber Bragg Grating coated with a layer of polymeric or metallic material (polyimide), either directly or by writing with UV light the Bragg grating and applying the coating to a standard optical fiber, the tube is used as a mold for the epoxy adhesive, since said tube comprises a material which is transparent to the UV light with which the adhesive is cured. Furthermore, the final step of heating the heat-shrinkable tube is key so that the mechanical union between all the layers and the fiber is performed, providing a robust temperature sensor.

In another preferred embodiment of the invention, the method further comprises performing the following step after step c) and before step e):
d') arranging coaxially the Fiber Bragg Grating and the heat-shrinkable tube.

In summary, the proposed temperature sensor allows for measuring temperature at cryogenic levels (i.e., around and below 20 K) without losing accuracy. This is achieved by its multi-layer coating formed by a polymeric material, preferably an epoxy adhesive and by a sheath comprising a thermically treated heat-shrinkable tube made, preferably, of PTFE. Moreover, this temperature sensor can be multiplexed and included in a system comprising a plurality of said sensors in order to monitor temperature and, eventually, deformation, in various applications. Lastly, its easy, non-expensive manufacturing method is also disclosed.

Unless otherwise defined, all terms (including technical and scientific terms) used herein are to be interpreted as is customary in the art. It will be further understood that terms in common usage should also be interpreted as is customary in the relevant art and not in an idealized or overly formal sense unless expressly so defined herein.

In this text, the term "comprises" and its derivations (such as "comprising", etc.) should not be understood in an excluding sense, that is, these terms should not be interpreted as excluding the possibility that what is described and defined may include further elements, steps, etc.

### BRIEF DESCRIPTION OF DRAWINGS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:
Figure 1 shows a schematic representation of a temperature sensor according to an embodiment of the invention.
Figure 2 shows a schematic representation of two temperature sensors corresponding to different sections of a single FBG according to an embodiment of the invention.
Figure 3 shows a schematic representation of various steps of the complete manufacturing process of a temperature sensor according to an embodiment of the invention.
Figure 4 shows a system comprising several temperature sensors according to an embodiment of the invention, as well as processing and storage means and a display.
Figure 5 shows an example of application of a system according to an embodiment of the invention to temperature measurement of liquid hydrogen in a cryogenic tank.

### NUMERIC REFERENCES USED IN THE DRAWINGS

| | |
|---|---|
| 1 | Temperature sensor |
| 2 | Fiber Bragg Grating (FBG) |
| 3 | First coating |
| 4 | Second coating |
| 5 | Cylindrical sheath |
| 6 | Heat-shrinkable tube |
| 7 | System |
| 8 | Processing means |
| 9 | Storage means |
| 10 | Display |

### DETAILED DESCRIPTION OF THE INVENTION

The example embodiments are described in sufficient detail to enable those of ordinary skill in the art to embody and implement the systems and processes herein described. It is important to understand that embodiments can be provided in many alternate forms and should not be construed as limited to the examples set forth herein.

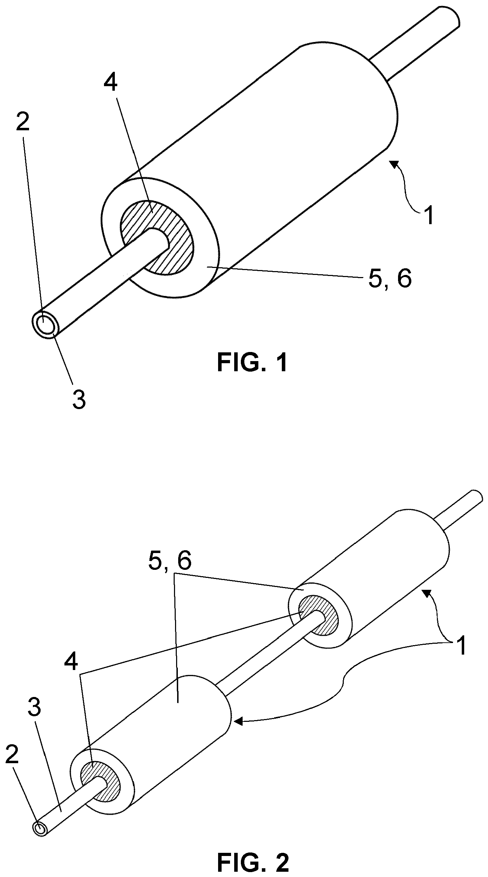

Accordingly, while embodiments can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate. Some preferred embodiments of the invention, shown in Figs. 1-5, will be now described for illustrative, but not limiting purposes.

Figure 1 shows a schematic representation of a temperature sensor 1 according to an embodiment of the present invention. In said figure, a Fiber Bragg Grating (FBG) 2 coated by a multi-layered structure is displayed. The different layers in the coating correspond to:
- a first coating 3 made of a polymer such as polyimide, arranged in contact with the FBG 2, which is usually directly provided by the FBG's manufacturer;
- a second coating 4 consisting of an epoxy adhesive and arranged externally to the first coating 3 such that the outer surface of the first coating 3 is in contact with the inner surface of the second coating 4; and
- an external, cylindrical sheath 5 corresponding to a PTFE heat-shrinkable tube 6, i.e., a UV light-transparent material with a thermal expansion coefficient of 5 · 10⁻⁶ K⁻¹ at 20 K, which is arranged externally to the second coating 4 and which has undergone a thermal treatment so that it exerts a pressure or throttling in the radial direction on the outer surface of the second coating 4.

As seen in Figure 1, the first and second coatings 3, 4 and the cylindrical sheath 5 are arranged coaxially to the FBG 2 in order to homogenize the structure of the temperature sensor such that no undesired tensions or deformations take place during the readings. Furthermore, the multi-layer coating only covers a section of the FBG 2. Fig. 2 shows an embodiment in which a plurality of sections of the same FBG 2 are coated/sheathed by the described multi-layer coverage. Each one of these coated sections may have the same or a different length.

In the embodiments shown in Figures 1 and 2, the inner diameter of the cylindrical sheath is 0.97 mm, and the thickness of the cylindrical sheath's wall is 0.23 mm, so the total diameter of the temperature sensor 1 is, approximately, 1.43 mm. Moreover, the diameter of the FBG 2 is 0.16 mm, the first coating 3 consisting of a thin layer of polyimide, is approximately 0.02 mm thick, and the second coating 4, made of epoxy adhesive, is approximately 0.5 mm thick. As seen in Figures 1 and 2, the thickness of each element (FBG 2, first coating 3, second coating 4 and cylindrical sheath 5) comprised by the temperature sensor 1 is homogeneous, i.e., the thickness is the same or approximately the same at any point within the corresponding element. This allows for avoiding undesired tensions or deformations too.

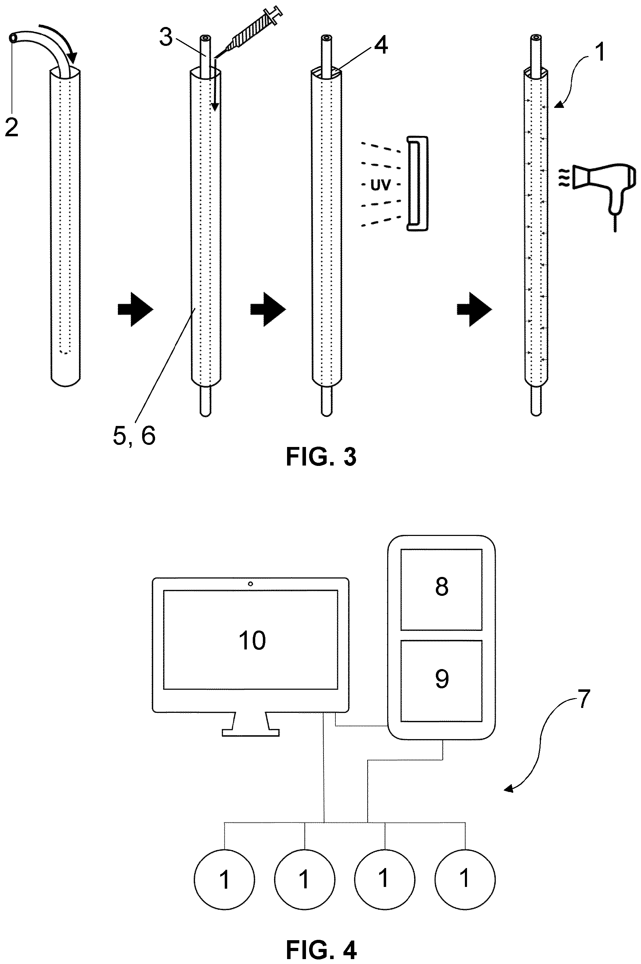

Regarding the manufacturing of a temperature sensor 1 according to the present invention, such as the one described in the previous embodiments, Fig. 3 shows schematically the overall process to be carried out.

First, a FBG 2 comprising a first coating 3 is to be provided. If said FBG 2 is not available, it can be obtained from a regular optical fiber by writing with UV light a plurality of fringes corresponding to a Bragg grating into a section of the core of said optical fiber. This is performed in a standard manner by applying UV laser light in combination with a phase mask and/or standard interference techniques. Then, a first coating 3 comprising a polymer (such as polyimide), or a metal (such as copper) may be applied also using standard techniques.

The next step of the manufacturing process is to introduce at least a section of the provided FBG 2 comprising a first coating 3 into a PTFE heat-shrinkable tube 6, which will act as a mold for the second coating 4. Once the FBG 2 is introduced in the PTFE heat-shrinkable tube 6, the FBG 2 must be tensed to ensure that it is kept straight (without forming folds or waves) in subsequent steps of the method.

With the FBG 2 tensed inside the PTFE heat-shrinkable tube 6, the space between said tube 6 and the FBG 2 is filled with an epoxy adhesive. Preferably, the epoxy adhesive used in this step is a NORLANDO's NOA^{®} 61 type adhesive, which cures instantly with UV light. The fact that the adhesive cures instantly with UV light has the advantage that no internal stresses are generated at ambient temperatures in the epoxy adhesive coating, which do occur if an epoxy adhesive is cured at temperatures of about 50 to 180°C.

Prior to this step, the FBG 2 and the PTFE heat-shrinkable tube 6 may be arranged coaxially to one another.

Due to the intrinsic properties of the PTFE, the epoxy adhesive can be cured by applying UV light externally and across the PTFE heat-shrinkable tube 6. To this aim, high intensity UV LEDs may be employed. The curation process corresponds to the next step of the manufacturing process.

The last step of the manufacturing process is to heat the PTFE heat-shrinkable tube 6 so that it shrinks and therefore exerts a pressure or throttling in the radial direction on the outer surface of cured epoxy adhesive. This throttling or crimping creates a strong, mechanical bond between the epoxy adhesive and the PTFE heat-shrinkable tube 6 as well as between the FBG 2 and the epoxy adhesive. It may be achieved in many ways such as, for instance, applying heat directly by means of a hot-air gun to the PTFE heat-shrinkable tube 6.

Figure 4 shows a system 7 for measuring temperature that comprises one or more of the previously described temperature sensors 1, wherein each temperature sensor 1 is configured to provide temperature data in the structure of the FBG 2. It is to be noted that different sensors may be comprised within the same FBG 2, corresponding to different sections of said FBG 2. Alternatively, different temperature sensors 1 may correspond to different FBGs 2.

Another possibility is to provide a single FBG 2 with one or more temperature sensors 1 and one or more sections of the FBG 2 without the multi-layer coating proposed by the present invention. In this way, the sections of the FBG 2 which do not comprise a temperature sensor 1 can be advantageously used as deformation sensors in order to simultaneously measure temperature and deformation within the same FBG 2.

The mentioned system 7 may further comprise, advantageously, one or more of the following:
- Processing means 8 connected to each temperature sensor 1 and adapted to obtain and process the temperature data provided by each temperature sensor 1. For example, said processing means may gather one or more sets of temperature data and process them in different ways: statistically (e.g., providing an average temperature), temporally (e.g., establishing a temperature history), spatially (e.g., elaborating a temperature map), predictively (e.g., anticipating temperature readings), etc. This may be done by software means comprised by the processing means 8 which may include artificial intelligence algorithms. The result of this processing may be provided as processed data.
- Storage means 9 connected to each temperature sensor 1 and/or to the processing means 8 and adapted to store the temperature data provided by each temperature sensor and/or the processed data.
- A display 10 connected to each temperature sensor 1 and/or to the processing means 8 and/or to the storage means 9 adapted to display to a user temperature data acquired by each temperature sensor 1, temperature data processed by the processing means 8 and/or temperature data stored in the storage means 9. This enables the user to monitor more efficiently the temperature readings provided by the temperature sensor/s 1.

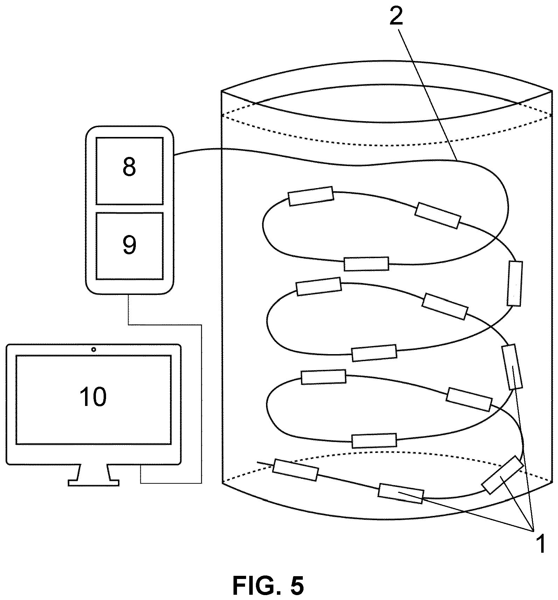

Finally, Figure 5 shows the application of a system 7 as described above to the measurement of temperature of liquid hydrogen contained in a cryogenic tank. As it can be seen, due to the robustness provided by the PTFE heat-shrinkable tube 6, the FBG 2 may be bent forming a helicoid, i.e., covering a large volume of the tank, without risk of damage. This allows for measuring safely and accurately the temperature of liquid hydrogen at different points within the tank allowing deduction of the amount of fuel in storage. It is to be noted that only one temperature sensor 1 according to any of the described embodiments may be used alternatively to the complete system 7. Moreover, many other applications of the described temperature sensor 1 and system 7 lie within the scope of the present invention, not being restricted to their use for measuring temperature of cryogenic, liquid hydrogen.

## Claims

1. Temperature sensor (1) comprising a Fiber Bragg Grating (2) wherein at least a section of said Fiber Bragg Grating (2) comprises:
- a first coating (3) comprising a polymeric or metallic material; and
- a second coating (4) comprising a polymeric material adapted to be cured with UV light, the second coating (4) comprising an inner surface arranged in contact with the first coating (3) and an outer surface;
the temperature sensor being **characterized in that** the Fiber Bragg Grating (2) further comprises :
- a cylindrical sheath (5) comprising a UV light-transparent heat-shrinkable tube (6), the cylindrical sheath (5) comprising an inner surface arranged in contact with the outer surface of the second coating (4);
wherein the UV light-transparent heat-shrinkable tube (6) comprises a material with a thermal expansion coefficient higher than 5 · 10⁻⁶ K⁻¹ at 20 K; and wherein the cylindrical sheath (5) has suffered a thermal process so that it exerts a pressure or throttling in the radial direction on the outer surface of the second coating (4).

2. Temperature sensor (1) according to the preceding claim, wherein:
- the material comprised by the first coating (3) comprises polyimide;
- the material comprised by the second coating (4) comprises an epoxy adhesive; and/or
- the UV light-transparent heat-shrinkable tube (6) comprises polytetrafluoroethylene (PTFE).

3. Temperature sensor (1) according to any of the preceding claims, wherein the first coating (3), the second coating (4), and/or the cylindrical sheath (5) are arranged coaxially to the Fiber Bragg Grating (2).

4. Temperature sensor (1) according to any of the preceding claims, wherein the thickness of the first coating (3), the thickness of the second coating (4) and/or the thickness of the cylindrical sheath (5) is homogeneous.

5. Measuring system (7) comprising one or more temperature sensors (1) according to any of the preceding claims, wherein each temperature sensor (1) is configured to provide temperature data in the structure of the Fiber Bragg Grating (2).

6. Measuring system (7) according to the preceding claim further comprising one or more deformation sensors configured to provide deformation data in the structure of the Fiber Bragg Grating (2) and arranged such that said one or more deformation sensors do not overlap with the one or more temperature sensors.

7. Measuring system (7) according to the preceding claim, further comprising:
- processing means (8) connected to each temperature sensor (1) and to each deformation sensor and adapted to obtain and process the temperature data and/or the deformation data provided by each temperature sensor (1) and/or deformation sensor providing processed data; and/or
- storage means (9) connected to each temperature sensor (1) and to each deformation sensor and/or to the processing means (8) and adapted to store the temperature data provided by each temperature sensor (1) and/or the deformation data provided by each deformation sensor and/or the processed data.

8. Measuring system (7) according to any one of claims 6 or 7, further comprising a display (10) connected to:
- each temperature sensor (1);
- each deformation sensor;
- the processing means (8); and/or
- the storage means (9);
the display being adapted to display to a user temperature data acquired by each temperature sensor (1), temperature data processed by the processing means (8), temperature data stored in the storage means (9), deformation data acquired by each deformation sensor (1), deformation data processed by the processing means (8) and/or deformation data stored in the storage means (9).

9. Method for manufacturing a temperature sensor (1) according to any of claims 1 to 4, the method being **characterized in that** it comprises performing the following steps in any possible technical order:
a) providing a Fiber Bragg Grating (2) comprising a first coating (3);
b) introducing a section of the Fiber Bragg Grating (2) into a UV light-transparent heat-shrinkable tube (6) comprising a material with a thermal expansion coefficient higher than 5 · 10⁻⁶ K⁻¹ at 20 K;
c) tensing the section of the Fiber Bragg Grating (2) introduced in the heat-shrinkable tube (6);
d) filling the space comprised between an outer surface of the first coating (3) and an inner surface of the PTFE heat-shrinkable tube (6) with a polymeric material adapted to be cured with UV light;
e) curing the polymeric material by applying UV light externally and across the heat-shrinkable tube (6); and
f) heating the heat-shrinkable tube (6) so that it exerts a pressure or throttling in the radial direction on an outer surface of the cured polymeric material.

10. Method according to the preceding claim, wherein step a) is carried out by following the sub steps:
a1) providing an optical fiber;
a2) writing with UV light a plurality of fringes corresponding to a Bragg grating into a section of the core of said optical fiber by applying UV laser light in combination with a phase mask and/or standard interference techniques, obtaining a Fiber Bragg Grating (2); and
a3) coating a section of the Fiber Bragg Grating (2) obtained in step a2) with a layer of polymeric or metallic material using standard techniques, obtaining a Fiber Bragg Grating (2) comprising a first coating (3).

11. Method according to any one of claims 9 or 10, further comprising performing the following step after step c) and before step e):
d') arranging coaxially the Fiber Bragg Grating (2) and the heat-shrinkable tube (6).
